# EUROPEAN PATENT APPLICATION

(11) **EP 4 475 239 A1**
(43) Date of publication of application: **11.12.2024**
(21) Application number: 23780773.0
(22) Date of filing: 29.03.2023
(51) Int. Cl.: H01M 8/2485, C25B 9/60, C25B 9/63, C25B 9/70, H01M 8/04, H01M 8/12, H01M 8/1213, H01M 8/243, H01M 8/2465, H01M 8/2475

(54) **ELECTROCHEMICAL CELL DEVICE, MODULE, AND MODULE HOUSING DEVICE**

(30) Priority: 31.03.2022 JP 2022061022
(71) Applicant: Kyocera Corporation, Kyoto-shi, Kyoto 612-8501 (JP)
(72) Inventor: SASAKI, Naoya, Kyoto-shi, Kyoto 612-8501 (JP)
(74) Representative: Viering, Jentschura & Partner mbB Patent- und Rechtsanwälte
(86) International application number: PCT/JP2023/012991
(87) International publication number: WO 2023/190765

(57) **Abstract**

An electrochemical cell device includes a cell stack, a support body, and a fixing material. The cell stack includes two or more cells each having a first end and extending from the first end in a first direction. The support body supports one end portion of the cell including the first end. The fixing material is located between the cell stack and the support body. The two or more cells include a first cell. The fixing material includes a first portion located closer to the first cell than the support body is and including a protruding portion protruding in the first direction or a direction opposite to the first direction.

## Description

### TECHNICAL FIELD

The present disclosure relates to an electrochemical cell device, a module, and a module housing device.

### BACKGROUND OF INVENTION

In recent years, various fuel cell stack devices each including two or more fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2015-35417 A

### SUMMARY

In an aspect of the embodiment, an electrochemical cell device includes a cell stack, a support body, and a fixing material. The cell stack includes two or more cells each having a first end and extending from the first end in a first direction. The support body supports one end portion of the cell including the first end. The fixing material is located between the cell stack and the support body. The two or more cells include a first cell. The fixing material includes a first portion located closer to the first cell than the support body is and including a protruding portion protruding in the first direction or a direction opposite to the first direction.

In an aspect of the embodiment, an electrochemical cell device includes an element portion, a support body, and a fixing material. The element portion has a first end and extends from the first end in a first direction. The support body supports one end portion of the element portion in the first direction. The fixing material is located between the element portion and the support body. The fixing material includes a first portion including a protruding portion protruding in the first direction or a direction opposite to the first direction.

In the present disclosure, a module includes the electrochemical cell device described above and a storage container housing the electrochemical cell device.

In the present disclosure, a module housing device includes the module described above, an auxiliary device configured to operate the module, and an external case housing the module and the auxiliary device.

### BRIEF DESCRIPTION OF THE DRAWINGS

FIG. 1A is a horizontal cross-sectional view illustrating an example of an electrochemical cell according to an embodiment.
FIG. 1B is a side view of the example of the electrochemical cell according to the embodiment when viewed from an air electrode side.
FIG. 1C is a side view of the example of the electrochemical cell according to the embodiment when viewed from an interconnector side.
FIG. 2A is a perspective view illustrating an example of an electrochemical cell device according to a first embodiment.
FIG. 2B is a cross-sectional view taken along a line X-X illustrated in FIG. 2A.
FIG. 2C is a top view illustrating the example of the electrochemical cell device according to the first embodiment.
FIG. 3 is a cross-sectional view taken along a line Y-Y illustrated in FIG. 2C.
FIG. 4 is a cross-sectional view taken along a line Z-Z illustrated in FIG. 2C.
FIG. 5 is a cross-sectional view illustrating an electrochemical cell device according to a second embodiment.
FIG. 6 is a cross-sectional view illustrating an electrochemical cell device according to a third embodiment.
FIG. 7 is a cross-sectional view illustrating an electrochemical cell device according to a fourth embodiment.
FIG. 8 is a cross-sectional view illustrating an electrochemical cell device according to a fifth embodiment.
FIG. 9 is a cross-sectional view illustrating a fixing material included in an electrochemical cell device according to a sixth embodiment.
FIG. 10 is a cross-sectional view illustrating an electrochemical cell device according to a seventh embodiment.
FIG. 11 is a cross-sectional view illustrating an electrochemical cell device according to an eighth embodiment.
FIG. 12 is a cross-sectional view illustrating an electrochemical cell device according to a ninth embodiment.
FIG. 13 is an exterior perspective view illustrating an example of a module according to an embodiment.
FIG. 14 is an exploded perspective view schematically illustrating an example of a module housing device according to an embodiment.
FIG. 15 is a horizontal cross-sectional view illustrating an example of an electrochemical cell included in an electrochemical cell device according to a tenth embodiment.
FIG. 16 is a cross-sectional view illustrating the example of the electrochemical cell device according to the tenth embodiment.
FIG. 17 is a cross-sectional view illustrating an example of an electrochemical cell included in an electrochemical cell device according to an eleventh embodiment.
FIG. 18 is a plan view illustrating the example of the electrochemical cell included in the electrochemical cell device according to the eleventh embodiment.

### DESCRIPTION OF EMBODIMENTS

A fuel cell stack device includes, for example, a fixing material between a support body supporting a fuel cell and the fuel cell, the fixing material fixing fuel cells. In such a fuel cell stack device, when the fixing material has a gap such as a crack, durability may be likely to be reduced.

It is expected to provide an electrochemical cell device, a module, and a module housing device having durability less likely to be reduced.

Embodiments of an electrochemical cell device, a module, and a module housing device disclosed in the present application will be described below in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

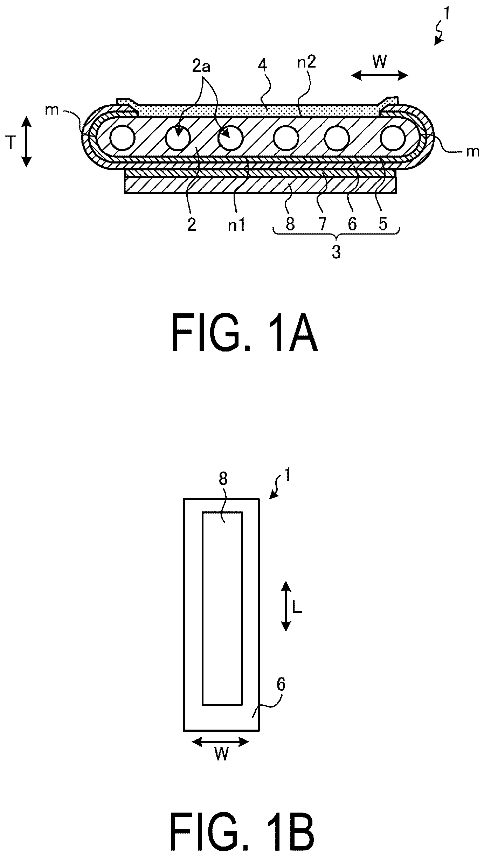

First, with reference to FIGs. 1A to 1C, an example of a solid oxide fuel cell will be described as an electrochemical cell according to the embodiment. The electrochemical cell device may include a cell stack including two or more the electrochemical cells. The electrochemical cell device including the two or more electrochemical cells is simply referred to as a cell stack device.

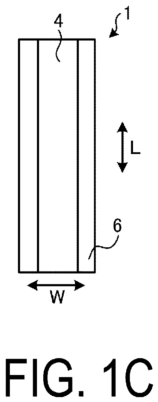

FIG. 1A is a horizontal cross-sectional view illustrating an example of an electrochemical cell according to an embodiment, FIG. 1B is a side view of the example of the electrochemical cell according to the embodiment when viewed from an air electrode side, and FIG. 1C is a side view of the example of the electrochemical cell according to the embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the shape of the entire cell 1 when viewed from the side is a rectangle having a side length of, for example, 5 cm to 50 cm in a length direction L and a length of, for example, 1 cm to 10 cm in a width direction W orthogonal to the length direction L. The thickness of the entire cell 1 in a thickness direction T is, for example, 1 mm to 5 mm. The length direction L is an example of a first direction. The width direction W is an example of a second direction intersecting the first direction.

As illustrated in FIG. 1A, the cell 1 includes a support substrate 2 with electrical conductivity, an element portion 3, and an interconnector 4. The support substrate 2 has a pillar shape having a pair of a first surface n1 and a second surface n2 facing each other, and a pair of arc-shaped side surfaces m connecting the first surface n1 and the second surface n2.

The element portion 3 is located on the first surface n1 of the support substrate 2. The element portion 3 includes a fuel electrode 5, a solid electrolyte layer 6, and an air electrode 8. In the example illustrated in FIG. 1A, the interconnector 4 is located on the second surface n2 of the cell 1. Note that the cell 1 may include an intermediate layer 7 between the solid electrolyte layer 6 and the air electrode 8.

As illustrated in FIG. 1B, the air electrode 8 does not extend to a lower end of the cell 1. At the lower end portion of the cell 1, only the solid electrolyte layer 6 is exposed on a surface of the first surface n1. As illustrated in FIG. 1C, the interconnector 4 may extend to the lower end of the cell 1. At the lower end portion of the cell 1, the interconnector 4 and the solid electrolyte layer 6 are exposed on the surface. Note that, as illustrated in FIG. 1A, the solid electrolyte layer 6 is exposed at the surface at the pair of arc-shaped side surfaces m of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability, and allows the gas flowing in the gas-flow passage 2a to permeate to the fuel electrode 5. The support substrate 2 may have electrical conductivity. The support substrate 2 having electrical conductivity causes electricity generated in the element portion to be collected in the interconnector 4.

The material of the support substrate 2 includes, for example, an iron group metal component and an inorganic oxide. For example, the iron group metal component may be, for example, Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, a porous electrically conductive ceramic, for example, a ceramic containing: ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. Stabilized zirconia also includes partially stabilized zirconia.

The solid electrolyte layer 6 is an electrolyte and bridges ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, in the range of 20% to 50%, particularly in the range of 30% to 50%. The open porosity of the air electrode 8 may also be referred to as the porosity of the air electrode 8.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion suppression layer. When strontium (Sr) contained in the air electrode 8 diffuses into the solid electrolyte layer 6, a resistance layer of SrZrOs is formed in the solid electrolyte layer 6. The intermediate layer 7 makes it difficult for Sr to diffuse, thereby making it difficult for SrZrOs to be formed.

The material of the intermediate layer 7 is not particularly limited as long as the material is one that generally makes an element less likely to diffuse between the air electrode 8 and the solid electrolyte layer 6. The material of the intermediate layer 7 may contain, for example, CeO₂ (cerium oxide) in which rare earth elements other than Ce (cerium) are in solid solution. As such rare earth elements, for example, Gd (gadolinium), Sm (samarium), or the like may be used.

The interconnector 4 is dense, and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite oxide (LaCrO₃-based oxide), a lanthanum strontium titanium-based perovskite oxide (LaSrTiO₃-based oxide), or the like may be used. These materials have electrical conductivity, and are neither reduced nor oxidized even when in contact with a fuel gas such as a hydrogen-containing gas and an oxygen-containing gas such as air.

The above-described cell 1 may include a recessed portion and/or a projecting portion to such an extent that power generation characteristics of the cell 1 are not greatly affected. The power generation characteristics of the cell 1 are greatly affected by, for example, leakage of a predetermined amount or more of the fuel gas or the oxygen-containing gas, leakage of a current, and the like. The recessed portion is, for example, a hole, a dent, a chip, a crack, or the like. The projecting portion is, for example, a bulge, a deposit, or the like. The deposit may be, for example, a fixing material, a bonding material, or the like, which will be described later.

The solid electrolyte layer 6 located around the element portion 3, for example, near an upper end, near a lower end, and a side surface m of the cell 1 and not covered with the intermediate layer 7 or the air electrode 8 may include a recessed portion and/or a projecting portion having a size of, for example, 0.5 mm or less. Even when such a recessed portion and/or a projecting portion is present on the solid electrolyte layer 6 around the element portion 3, the power generation characteristics of the cell 1 are not greatly affected. The recessed portion may have a size of 0.5 mm or more, and an opening portion of the recessed portion may be covered with, for example, glass or the like used as a fixing material, a bonding material, or the like described later. The projecting portion formed by covering the recessed portion with glass or the like may have a size of, for example, 0.5 mm or more.

The cell 1 may include the recessed portion and/or the protruding portion on a surface of the upper end and/or a surface of the lower end. For example, even when a recessed portion and/or a projecting portion in no contact with the gas-flow passages 2a is located on the surface of the upper end and/or the surface of the lower end of the cell 1, the power generation characteristics of the cell 1 are not greatly affected.

The intermediate layer 7 not covered with the air electrode 8 may be located around the element portion 3. The intermediate layer 7 may be partially located or need not be located around the element portion 3.

The interconnector 4 may be located near the upper end or near the lower end of the cell 1. The interconnector 4 may be partially located or need not be located near the upper end or the lower end of the cell 1.

### Configuration of Electrochemical Cell Device

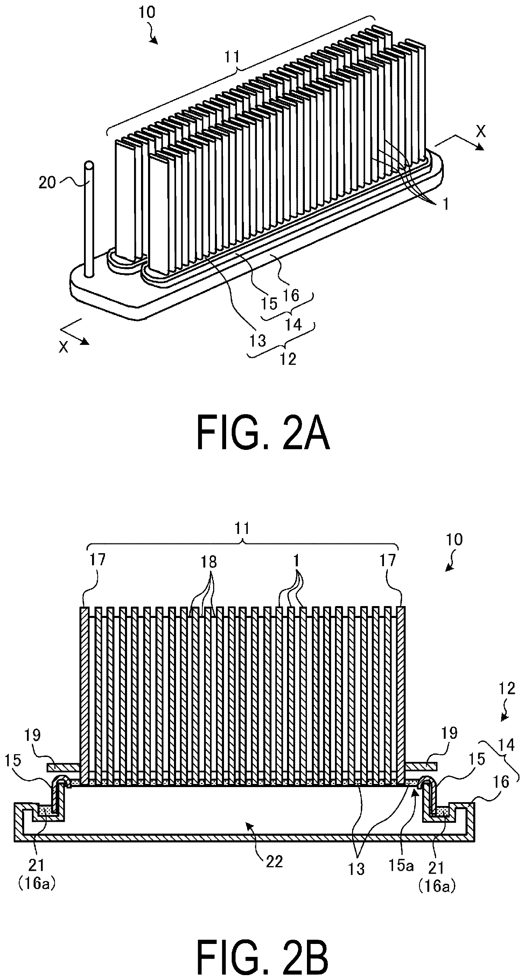

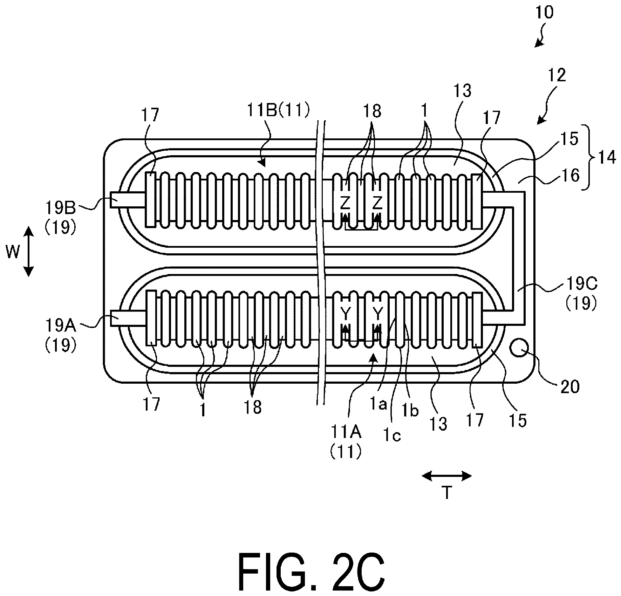

An electrochemical cell device according to the present embodiment using the cell 1 described above will be described with reference to FIGs. 2A to 2C. FIG. 2A is a perspective view illustrating an example of the electrochemical cell device according to the first embodiment, FIG. 2B is a cross-sectional view taken along a line X-X illustrated in FIG. 2A, and FIG. 2C is a top view illustrating the example of the cell stack device according to the first embodiment.

As illustrated in FIG. 2A, a cell stack device 10 includes a cell stack 11 including two or more the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, constituting the support member 14, are made of metal and electrically conductive.

As illustrated in FIG. 2B, the support body 15 includes an insertion hole 15a, into which the lower end portions of the two or more cells 1 are inserted. The lower end portions of the two or more cells 1 and the inner wall of the insertion hole 15a are bonded by the fixing material 13.

The gas tank 16 includes an opening portion through which a reactive gas is supplied to the two or more cells 1 via the insertion hole 15a, and a recessed groove 16a located in the periphery of the opening portion. An outer peripheral end portion of the support body 15 is bonded to the gas tank 16 by a bonding material 21, with which the recessed groove 16a of the gas tank 16 is filled.

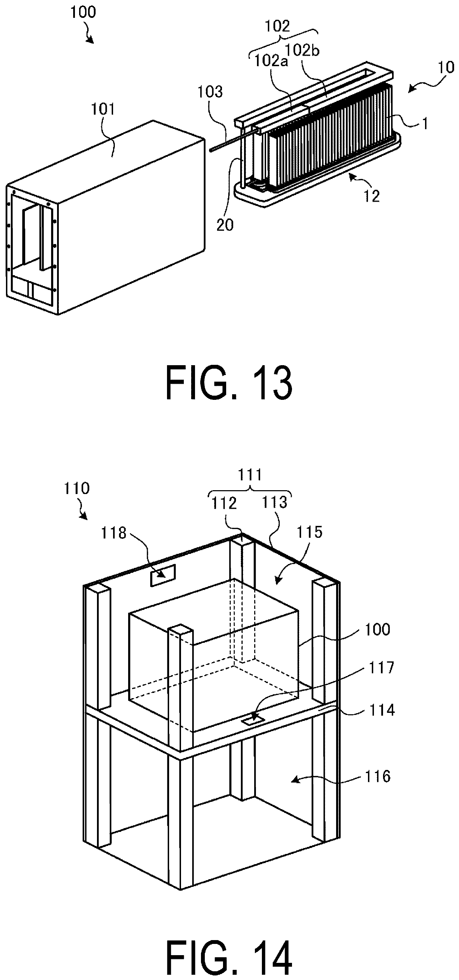

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas supplied to the gas tank 16 is generated by a reformer 102 (see FIG. 13) to be described later. The internal space 22 may be rephrased as a space of a reducing atmosphere containing the fuel gas.

A hydrogen-rich fuel gas can be produced, for example, by steam-reforming a raw fuel. When the fuel gas is produced by steam reforming, the fuel gas contains steam.

The example illustrated in FIG. 2A includes two rows of cell stacks 11, two support bodies 15, and the gas tank 16. The two rows of the cell stacks 11 each have two or more cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing material 13 and solidified. As a result, the inner wall of the insertion hole 15a and the lower end portions of the two or more cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent two cells 1 of the two or more cells 1. Each of the electrically conductive members 18 electrically connects in series the fuel electrode 5 of one of the adjacent two cells 1 with the air electrode 8 of the other one of the adjacent two cells 1. More specifically, the electrically conductive member 18 electrically connects the interconnector 4 electrically connected to the fuel electrode 5 of the one of the adjacent two cells 1 and the air electrode 8 of the other one of the adjacent two cells 1. The electrically conductive member 18 may be in contact with the fixing material 13 or be in no contact with the fixing material 13.

As illustrated in FIG. 2B, the end current collection members 17 are electrically connected to the cells 1 located at the outermost sides in the arrangement direction of the two or more cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

As illustrated in FIG. 2C, the cell 1 has a pair of main surfaces 1a and 1b along the width direction W and a side surface 1c connecting the pair of main surfaces 1a and 1b. The fixing material 13 is located between two cells 1 adjacent to each other in the thickness direction T and between the side surface 1c and the support body 15 facing each other in the width direction W.

### Structure of Fixing Material near Cell Stack

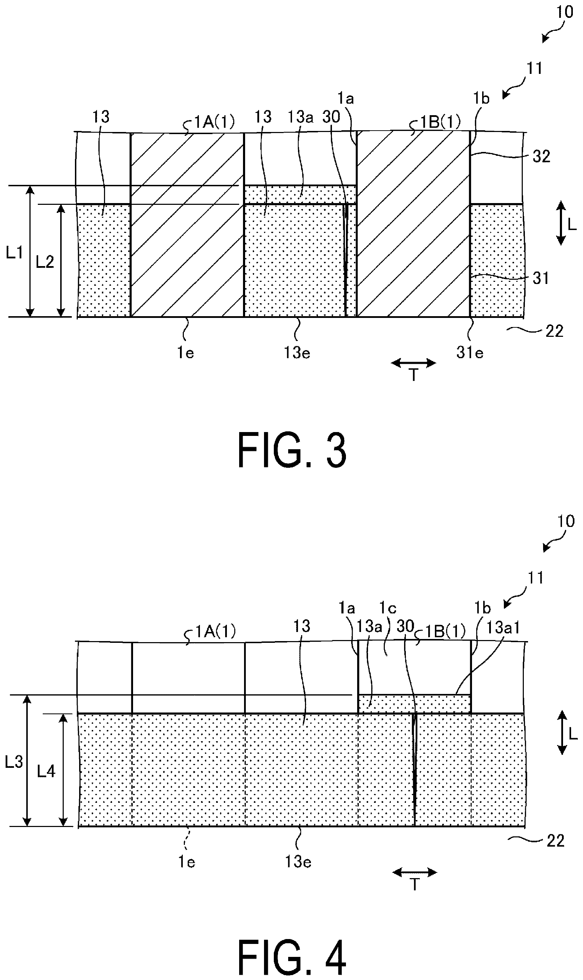

Next, a structure of the fixing material 13 located near the cell stack 11 will be described with reference to FIGs. 2B to 4. FIG. 3 is a cross-sectional view taken along a line Y-Y illustrated in FIG. 2C.

As illustrated in FIG. 3, the fixing material 13 is located between two cells 1 adjacent to each other in the thickness direction T. The fixing material 13 is located on a first end 1e side which is a lower end of the cell 1 in the length direction L, and the fixing material 13 supports one end portion of the cell 1 including the first end 1e. In FIG. 3, the shape and structure of the cell 1 are simplified.

The cell 1 includes a contact region 31 in contact with the fixing material 13 and a non-contact region 32 in no contact with the fixing material 13. The contact region 31 has a second end 31e on the first end 1e side. In FIG. 3, the second end 31e coincides with the first end 1e, but they need not coincide with each other.

In the manufacturing process of the cell stack device 10, a space 30 may be formed inside the fixing material 13 located near the cell 1. When such a space 30 penetrates the fixing material 13 in the length direction L, the fuel gas housed in the internal space 22 may leak to the outside of the cell stack device 10, and the electrochemical cell device may not need to exhibit desired battery performance.

In the present embodiment, for example, a protruding portion 13a is located on the fixing material 13 where the space 30 is located, and thus the durability can be made less likely to be reduced. In the embodiment, the fixing material 13 includes a first portion including the protruding portion 13a protruding in the length direction L. The first portion is a portion of the fixing material 13 where the protruding portion 13a is located. As illustrated in FIG. 3, the first portion may be located between a cell 1A and a cell 1B adjacent to each other in the thickness direction T. The first portion is located closer to the cell 1A and the cell 1B than the support body 15. The cell 1B is an example of the first cell.

As described above, the fixing material 13 includes the first portion including the protruding portion 13a at a site where the space 30 is located, and thus the durability is less likely to be reduced. A material of the protruding portion 13a may be, for example, the same material as that of the fixing material 13. The protruding portion 13a is formed by attaching the material of the protruding portion 13a to the surface of the fixing material 13 and baking and/or cooling the material. In the first portion, the protruding portion 13a and the fixing material 13 are integrated with each other, and thus the first portion is difficult to be visually confirmed. The material of the protruding portion 13a attached to the surface of the fixing material 13 may be a softened or melted material, or may be a paste containing the material of the protruding portion 13a.

When the same material as that of the fixing material 13 is used for the protruding portion 13a, after the fixing material 13 is formed, the protruding portion 13a may be formed in a shorter time or at a lower temperature than a condition under which the fixing material 13 is formed. As a result, the protruding portion 13a can be formed without damaging the fixing material 13. In this case, the material of the protruding portion 13a is unlikely to enter the inside of the space 30, and the protruding portion 13a is likely to be formed on the space 30. The protruding portion 13a may be formed using a paste containing the material of the protruding portion 13a, the paste being adjusted to have such a viscosity that the material does not enter the space 30.

The material of the protruding portion 13a may be a material having a melting point or a softening point lower than that of the fixing material 13. As a result, after the fixing material 13 is formed, the protruding portion 13a can be formed at the lower temperature than the condition under which the fixing material 13 is formed. As a result, the protruding portion 13a can be formed without damaging the fixing material 13. In this case, the material of the protruding portion 13a is likely to enter the inside of the space 30. Thus, the space 30 need not be located below the protruding portion 13a. As a result of the material of the protruding portion 13a entering the inside of the space 30, a recessed portion may be formed in a part of the protruding portion 13a.

The above-described protruding portion 13a may be formed by locally heating a portion where the protruding portion 13a is formed.

A length L1, which is the maximum length in the length direction L of the fixing material 13 in the first portion where the protruding portion 13a is located, may be greater than a length L2, which is an average length in the length direction L of the fixing material 13 in a second portion where the protruding portion 13a is not located. In this case, the length L1 may be, for example, about 1.1 × L2 ≤ L1 ≤ 2.0 × L2, particularly about 1.3 × L2 ≤ L1 ≤ 1.5 × L2. When such a protruding portion 13a is located, even in a case where the space 30 is located in the first portion, the space 30 is less likely to penetrate the fixing material 13 by closing one end of the space 30, and thus the durability is less likely to be reduced. The fixing material 13 has an end portion 13e on the internal space 22 side. In FIG. 3, the end portion 13e coincides with the first end 1e and the second end 31e, but they need not coincide with each other. In FIG. 3, the length L1 in the first portion coincides with a length in the length direction L from the second end 31e of the contact region 31 to the non-contact region 32 in the cell 1B in contact with the first portion, but they need not coincide with each other.

The length L2 of the second portion can be measured as follows. That is, in the second portion where the protruding portion 13a is not located, the length of the fixing material 13 in the length direction L may be measured at any ten points, and the average thereof may be used as the length L2.

FIG. 4 is a cross-sectional view taken along a line Z-Z illustrated in FIG. 2C. As illustrated in FIG. 4, when the space 30 is located between the cell 1B and the support body 15 (see FIG. 2C), the first portion including the protruding portion 13a located between the cell 1B and the support body 15 where the space 30 is located is formed, and thus the durability of the cell stack device 10 is less likely to be reduced.

A length L3, which is the maximum length in the length direction L of the fixing material 13 in the first portion where the protruding portion 13a is located, may be greater than a length L4, which is an average length in the length direction L of the fixing material 13 in a second portion where the protruding portion 13a is not located. In this case, the length L3 may be, for example, about 1.1 × L4 ≤ L3 ≤ 2.0 × L4, particularly about 1.3 × L4 ≤ L3 ≤ 1.5 × L4. When such a protruding portion 13a is located, even in the case where the space 30 is located in the first portion, the space 30 is less likely to penetrate the fixing material 13 by closing one end of the space 30, and thus the durability is less likely to be reduced. The fixing material 13 has an end portion 13e on the internal space 22 side. In FIG. 4, the end portion 13e coincides with the first end 1e and the second end 31e, but they need not coincide with each other. In FIG. 4, the length of the protruding portion 13a in the thickness direction T coincides with the length of the cell 1B in the thickness direction T, but they need not coincide with each other.

As described above, even in the case where the fixing material 13 near the cell 1 located between the adjacent cells 1 and between the cell 1 and the support body 15 includes the space 30, when the cell stack device 10 includes the first portion where the protruding portion 13a corresponding to the space 30 is located, the durability of the cell stack device 10 is less likely to be reduced. The space 30 may be located only between the adjacent cells 1, or may be located only between the cell 1 and the support body 15. At least a part of the space 30 may face the cell 1.

### Second Embodiment

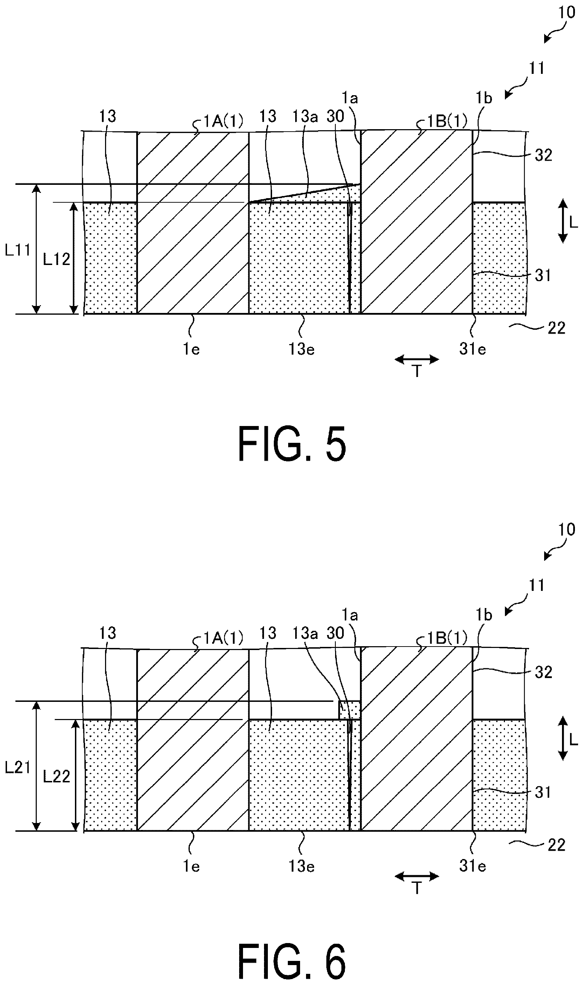

Cell stack devices 10 according to a second to a ninth embodiments will be described with reference to FIG. 5 to FIG. 12. FIG. 5 is a cross-sectional view illustrating an electrochemical cell device according to a second embodiment.

As illustrated in FIG. 5, the fixing material 13 may include a first portion including the protruding portion 13a located between the cell 1A and the cell 1B, the protruding portion 13a having a surface inclined with respect to the thickness direction T so that the length in the length direction L gradually increases from the cell 1A side toward the cell 1B.

A length L11, which is the maximum length in the length direction L of the fixing material 13 in the first portion where the protruding portion 13a is located, may be greater than a length L12, which is an average length in the length direction L of the fixing material 13 in a second portion where the protruding portion 13a is not located. In this case, the length L11 may be, for example, about 1.1 × L12 ≤ L11 ≤ 2.0 × L12, particularly about 1.3 × L12 ≤ L11 ≤ 1.5 × L12. When such a protruding portion 13a is located, even in the case where the space 30 is located in the first portion, the space 30 is less likely to penetrate the fixing material 13 by closing one end of the space 30, and thus the durability is less likely to be reduced.

### Third Embodiment

FIG. 6 is a cross-sectional view illustrating the electrochemical cell device according to a third embodiment. As illustrated in FIG. 6, the fixing material 13 may include a first portion including the protruding portion 13a partially located between the cell 1A and the cell 1B so as to correspond to the space 30 located closer to the cell 1A than the cell 1B.

A length L21, which is the maximum length in the length direction L of the fixing material 13 in the first portion where the protruding portion 13a is located, may be greater than a length L22, which is an average length in the length direction L of the fixing material 13 in a second portion where the protruding portion 13a is not located. In this case, the length L21 may be, for example, about 1.1 × L22 ≤ L21 ≤ 2.0 × L22, particularly about 1.3 × L22 ≤ L21 ≤ 1.5 × L22. When such a protruding portion 13a is located, even in the case where the space 30 is located in the first portion, the space 30 is less likely to penetrate the fixing material 13 by closing one end of the space 30, and thus the durability is less likely to be reduced.

### Fourth Embodiment

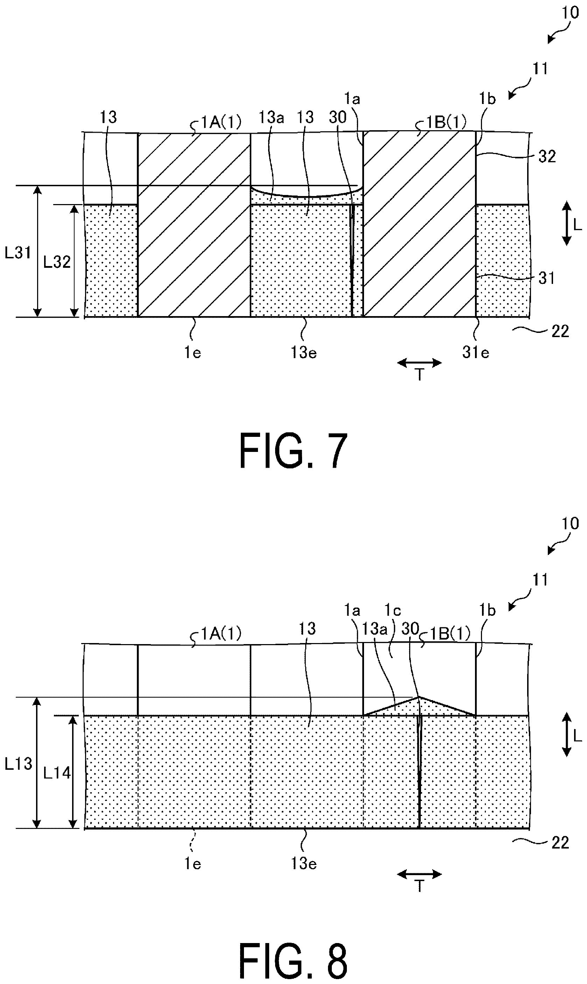

FIG. 7 is a cross-sectional view illustrating the electrochemical cell device according to a fourth embodiment. As illustrated in FIG. 7, the fixing material 13 may include a first portion including the protruding portion 13a having a recessed cross-sectional shape in which the length in the length direction L increases from an intermediate portion between the cells 1A and 1B toward the cells 1A and 1B.

A length L31, which is the maximum length in the length direction L of the fixing material 13 in the first portion where the protruding portion 13a is located, may be greater than a length L32, which is an average length in the length direction L of the fixing material 13 in a second portion where the protruding portion 13a is not located. In this case, the length L31 may be, for example, about 1.1 × L32 ≤ L31 ≤ 2.0 × L32, particularly about 1.3 × L32 ≤ L31 ≤ 1.5 × L32. When such a protruding portion 13a is located, even in the case where the space 30 is located in the first portion, the space 30 is less likely to penetrate the fixing material 13 by closing one end of the space 30, and thus the durability is less likely to be reduced.

### Fifth Embodiment

FIG. 8 is a cross-sectional view illustrating the electrochemical cell device according to a fifth embodiment. As illustrated in FIG. 8, the fixing material 13 may include a first portion including the protruding portion 13a located between the cell 1B and the support body 15, the protruding portion 13a including a center portion in the thickness direction T protruding in the length direction L.

A length L13, which is the maximum length in the length direction L of the fixing material 13 in the first portion where the protruding portion 13a is located, may be greater than a length L14, which is an average length in the length direction L of the fixing material 13 in a second portion where the protruding portion 13a is not located. In this case, the length L13 may be, for example, about 1.1 × L14 ≤ L13 ≤ 2.0 × L14, particularly about 1.3 × L14 ≤ L13 ≤ 1.5 × L14. When such a protruding portion 13a is located, even in the case where the space 30 is located in the first portion, the space 30 is less likely to penetrate the fixing material 13 by closing one end of the space 30, and thus the durability is less likely to be reduced.

### Sixth to Ninth Embodiments

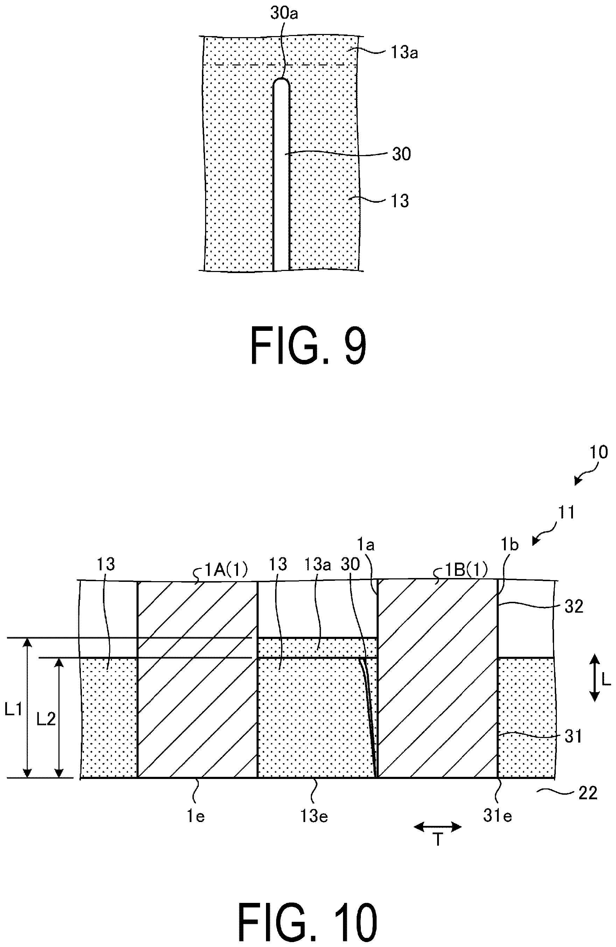

FIG. 9 is a cross-sectional view illustrating a fixing material included in an electrochemical cell device according to a sixth embodiment. FIGs. 10 to 12 are cross-sectional views illustrating electrochemical cell devices according to a seventh to a ninth embodiments, respectively.

As illustrated in FIG. 9, in the space 30 located inside the fixing material 13, an end portion 30a facing the protruding portion 13a may be rounded. The end portion 30a of the space 30 may be located away from the protruding portion 13a. When the end portion 30a is rounded, stresses are dispersed in the end portion 30a, and the space 30 is less likely to extend to the protruding portion 13a. When the space 30 is hollow, the stresses applied to the fixing material 13 can be dispersed and absorbed by the space 30, and the durability of the cell can be made less likely to be reduced. Such a shape of the space 30 is formed by partially softening the fixing material 13 at the end portion 30a of the space 30 by processing the fixing material 13 in a shorter time or at a lower temperature than the condition under which the fixing material 13 is formed. As illustrated in FIG. 10, a cross-sectional shape of the space 30 may be curved. In the space 30, a distance to the cell 1B may be different between the protruding portion 13a side and the internal space 22 side. For example, a distance from the space 30 to the cell 1B on the protruding portion 13a side may be larger than a distance from the space 30 to the cell 1B on the internal space 22 side.

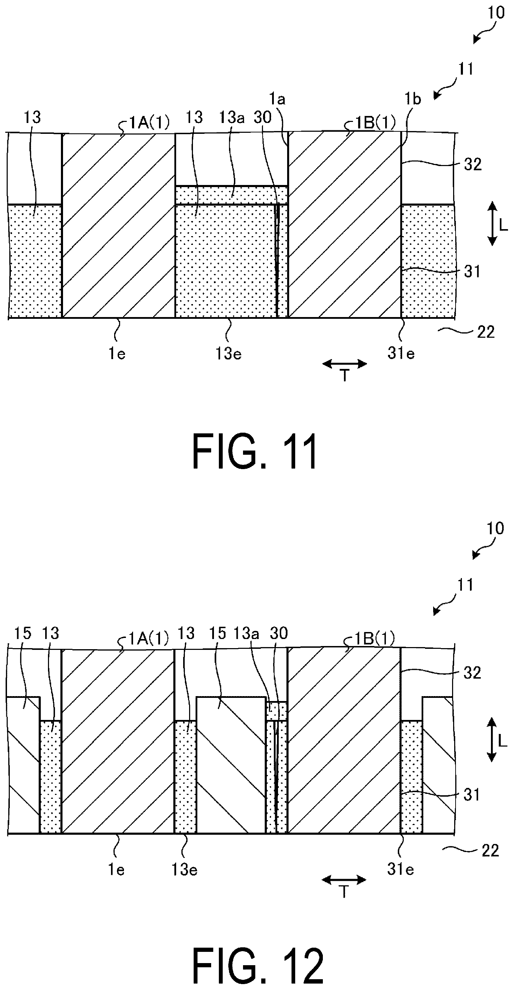

As illustrated in FIG. 11, the fixing material 13 may be located inside the space 30. As illustrated in FIG. 12, the support body 15 may be located between the cells 1A and 1B adjacent to each other in the thickness direction T. For example, a first portion including the protruding portion 13a located between the cell 1B and the support body 15 where the space 30 is located may be formed.

### Module

A module using the cell stack device 10 described above will be described with reference to FIG. 13. FIG. 13 is an external perspective view illustrating an example of the module according to an embodiment. FIG. 13 illustrates a state in which the front and rear surfaces that are part of a storage container 101 are removed, and the cell stack device 10 of a fuel cell housed in the container is taken out rearward.

As illustrated in FIG. 13, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

The fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

The cell stack device 10 may be any one of the cell stack devices 10 according to the above-described embodiments. As described above, the module 100 is configured by housing the cell stack device 10 having the durability less likely to be reduced, so that the module 100 having the durability less likely to be reduced can be obtained.

### Module Housing Device

FIG. 14 is an exploded perspective view illustrating an example of a module housing device according to an embodiment. A module housing device 110 according to the present embodiment includes an external case 111, the module 100 illustrated in FIG. 13, and an auxiliary device (not illustrated). The auxiliary device operates the module 100. The module 100 and the auxiliary device are housed in the external case 111. Note that in FIG. 14, the configuration is partially omitted.

The external case 111 of the module housing device 110 illustrated in FIG. 14 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that in FIG. 14, the auxiliary device housed in the auxiliary device housing chamber 116 is omitted.

The dividing plate 114 includes an air circulation hole 117 for causing air in the auxiliary device housing chamber 116 to flow into the module housing chamber 115 side. The external plate 113 constituting the module housing chamber 115 includes an exhaust hole 118 for discharging air inside the module housing chamber 115.

In the module housing device 110, the module housing device 110 having the durability less likely to be reduced can be obtained by providing the module 100 having the durability less likely to be reduced in the module housing chamber 115 as described above.

Note that, in the embodiment described above, the case where the support substrate of the hollow flat plate-shaped is used has been exemplified; however, the embodiment can also be applied to an electrochemical cell device including the cells 1 using a cylindrical support substrate.

### Tenth Embodiment

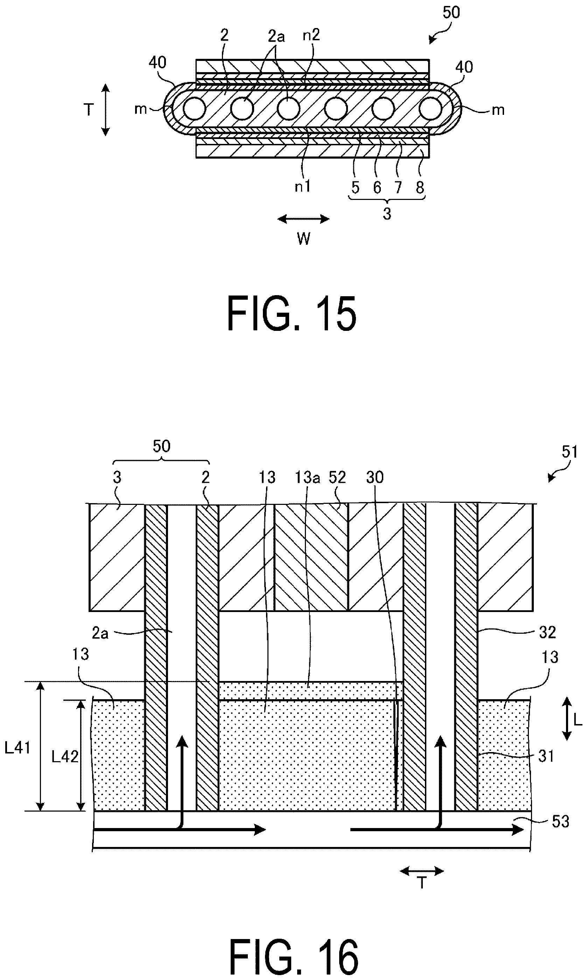

Next, an electrochemical cell device according to a tenth embodiment and an electrochemical cell included in the electrochemical cell device will be described with reference to FIG. 15 and FIG. 16.

In the embodiment described above, a so-called "vertically striped type" cell 1, in which only one element portion including a fuel electrode layer, a solid electrolyte layer, and an air electrode layer is provided on the surface of the support substrate, is exemplified. However, the present disclosure can be applied to a horizontally striped type cell stack device with an array of so-called "horizontally striped type" cells, in which a plurality of element portions are provided on the surface of a support substrate at mutually separated locations, and adjacent element portions are electrically connected to each other.

FIG. 15 is a horizontal cross-sectional view illustrating an example of the electrochemical cell included in the electrochemical cell device according to the tenth embodiment. FIG. 16 is a cross-sectional view illustrating an example of the electrochemical cell device according to the tenth embodiment.

As illustrated in FIG. 15, a cell 50 according to the present embodiment includes the support substrate 2, a pair of the element portions 3, and a sealing portion 40. The support substrate 2 has a pillar shape having a first surface n1 and a second surface n2 which are a pair of flat surfaces facing each other, and a pair of arc-shaped side surfaces m connecting the first surface n1 and the second surface n2.

The pair of element portions 3 are located on the first surface n1 and the second surface n2 of the support substrate 2 so as to face each other. The sealing portion 40 is located to cover the side surface m of the support substrate 2.

The cell 50 has a shape that is vertically symmetric with respect to a plane that passes through a center in the thickness direction T and is parallel to the main surface of the support substrate 2. The element portion 3 includes the fuel electrode 5, the solid electrolyte layer 6, the intermediate layer 7, and the air electrode 8 layered in this order.

As illustrated in FIG. 16, a cell stack device 51 according to the present embodiment includes two or more the cells 50 arranged in the length direction L from a pipe 53 configured to distribute a fuel gas. The cell 50 includes a plurality of the element portions 3 on the support substrate 2. A gas-flow passage 2a, through which a fuel gas from the pipe 22a flows, is provided inside the support substrate 2.

The cells 50 are electrically connected to each other via connecting members 52. Each of the connecting members 52 is located between the element portions 3 each included in a corresponding one of the cells 50 and connects adjacent ones of the cells 50 to each other. Specifically, the connecting member 52 connects the air electrode 8 of the element portion 3 of one of the adjacent ones of the cells 50 to the fuel electrode 5 of the other one of the adjacent ones of the cells 50.

As illustrated in FIG. 16, the space 30 may be located in the fixing material 13 between the cells 50 adjacent to each other. The first portion including the protruding portion 13a located between the cells 50 where the space 30 is located is formed, and thus the durability of the cell stack device 51 is less likely to be reduced.

A length L41, which is the maximum length in the length direction L of the fixing material 13 in the first portion where the protruding portion 13a is located, may be greater than a length L42, which is an average length in the length direction L of the fixing material 13 in a second portion where the protruding portion 13a is not located. In this case, the length L41 may be, for example, about 1.1 × L42 ≤ L41 ≤ 2.0 × L42, particularly about 1.3 × L42 ≤ L41 ≤ 1.5 × L42. When such a protruding portion 13a is located, even in the case where the space 30 is located in the first portion, the space 30 is less likely to penetrate the fixing material 13 by closing one end of the space 30, and thus the durability is less likely to be reduced.

Although not illustrated in the drawings, in the case where the fixing material 13 located between the cell 50 and the support body supporting the cell 50 includes the space 30, when the cell stack device 51 includes the first portion where the protruding portion 13a corresponding to the space 30 is located, the durability of the cell stack device 51 is less likely to be reduced.

### Eleventh Embodiment

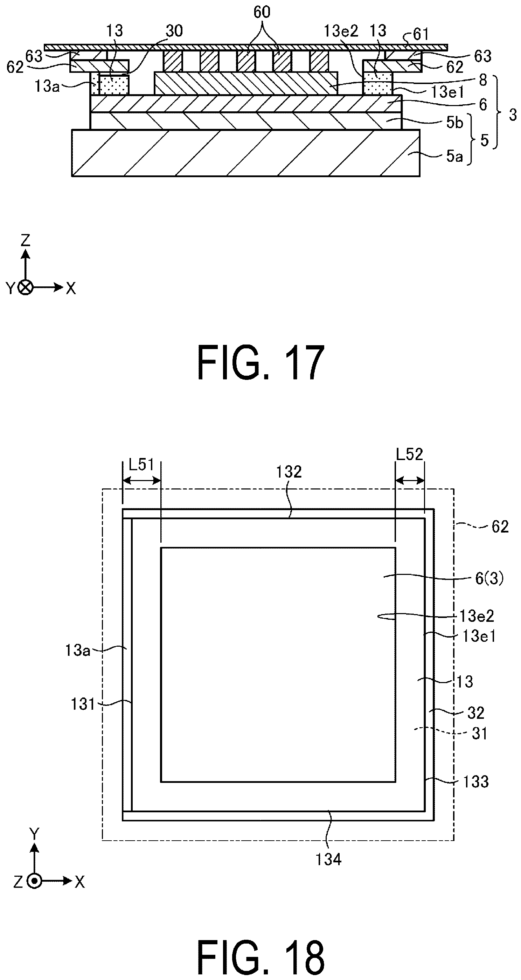

Next, an electrochemical cell included in an electrochemical cell device according to an eleventh embodiment will be described with reference to FIG. 17 and FIG. 18.

FIG. 17 is a cross-sectional view illustrating an example of an electrochemical cell included in an electrochemical cell device according to the eleventh embodiment. FIG. 18 is a plan view illustrating the example of the electrochemical cell included in the electrochemical cell device according to the eleventh embodiment. FIGs. 17 and 18 each illustrate a three-dimensional orthogonal coordinate system including a Z-axis in which a vertically upward direction is a positive direction and a vertically downward direction is a negative direction.

The electrochemical cell according to the present embodiment includes an element portion 3, a fixing material 13, a current collector 60, an interconnector 61, a spacer 62, and a sealing material 63. The electrochemical cell device according to the present embodiment is obtained by laminating the electrochemical cells according to the present embodiment in the Z-axis direction.

The fixing material 13 is located between the element portion 3 and the spacer 62. The sealing material 63 is located between the interconnector 61 and the spacer 62. The spacer 62 is a frame-shaped member and is an example of the support body. The spacer 62 may be a metal member welded to the interconnector 61 without the sealing material 63 interposed therebetween. The spacer 62 may be an insulating material or a metal material with an insulating coating. The fixing material 13 and the sealing material 63 have airtightness. Materials of the fixing material 13 and sealing material 63 may be, for example, amorphous glass, crystallized glass, a ceramic, or a brazing material.

The element portion 3 includes a fuel electrode 5, a solid electrolyte layer 6, and an air electrode 8. The fuel electrode 5 includes a substrate 5a and an active portion 5b. The substrate 5a may be a porous ceramic or a metal or alloy with porosity or a gas-flow passage. The fuel electrode 5 need not include the substrate 5a. The current collector 60 is located between the interconnector 61 and the air electrode 8. The fixing material 13 bonds an outer peripheral edge portion of the solid electrolyte layer 6 to an inner peripheral edge portion of the spacer 62.

As illustrated in FIG. 18, the fixing material 13 includes a first edge portion 13e1 located on an outer peripheral side facing the fuel gas and a second edge portion 13e2 located on an inner peripheral side facing the oxygen-containing gas. The first edge portion 13e1 includes edge portions 131 and 133 extending along the Y-axis direction and edge portions 132 and 134 extending along the X-axis direction so as to connect both end portions of the edge portions 131 and 133.

As illustrated in FIG. 17, the space 30 may be included between the fixing material 13 and the spacer 62. The space 30 is located between the fixing material 13 and spacer 62 on the X-axis negative direction side where the edge portion 131 is located, and the space 30 is located so as to cause the edge portion 131 side and the second edge portion 13e2 side of the fixing material 13 to communicate with each other.

The electrochemical cell according to the present embodiment includes a first portion where the protruding portion 13a extending in the Y-axis direction is located outside the edge portion 131, that is, on the X-axis negative direction side. The protruding portion 13a is located between the solid electrolyte layer 6 and the spacer 62 so as to close one end of the space 30. As described above, the first portion including the protruding portion 13a is formed, and thus the durability of the electrochemical cell is less likely to be reduced.

As illustrated in FIG. 18, a length L51, which is a length in the X-axis direction of the fixing material 13 in the first portion where the protruding portion 13a is located, may be greater than a length L52, which is an average length in the X-axis direction of the fixing material 13 in the second portion where the protruding portion 13a is not located. In this case, the length L51 may be, for example, about 1.1 × L52 ≤ L51 ≤ 2.0 × L52, particularly about 1.3 × L52 ≤ L51 ≤ 1.5 × L52. When such a protruding portion 13a is located, even in the case where the space 30 is located in the first portion, the space 30 is less likely to penetrate the fixing material 13 by closing one end of the space 30, and thus the durability is less likely to be reduced. In FIG. 18, the protruding portion 13a is located outside the first edge portion 13e1, but may be located inside the second edge portion 13e2. In such a case, the protruding portion 13a may be located between the solid electrolyte layer 6 and the spacer 62, or may be located so as to straddle the solid electrolyte layer 6 and the end surface of the spacer 62.

### Other Embodiments

An electrochemical cell device according to other embodiments will be described.

In the embodiments described above, a fuel cell, a fuel cell stack device, a fuel cell module, and a fuel cell device have been illustrated as examples of the "electrochemical cell", the "electrochemical cell device", the "module", and the "module housing device"; however, they may be an electrolytic cell, an electrolytic cell stack device, an electrolytic module, and an electrolytic device, respectively, as other examples. The electrolytic cell includes a first electrode layer and a second electrode layer, and decomposes water vapor into hydrogen and oxygen or decomposes carbon dioxide into carbon monoxide and oxygen by supplying electric power. According to the electrolytic cell, electrolytic cell stack device, electrolytic module, and electrolytic device discussed above, the durability is less likely to be reduced.

In the above-described embodiments, it is described that the space 30 is included at the position corresponding to the protruding portion 13a in the first portion of the fixing material 13, but the space 30 need not be included. The protruding portion 13a may be located in advance at a position where the space 30 is likely to be located, or when the fixing material 13 is located inside the space 30, the space 30 may disappear.

While the present disclosure has been described in detail, the present disclosure is not limited to the aforementioned embodiments, and various changes, improvements, and the like can be made without departing from the gist of the present disclosure.

As described above, the electrochemical cell device according to the embodiment includes the cell stack 11, the support body 15, and the fixing material 13. The cell stack 11 includes the two or more cells 1 each having the first end 1e and extending in the first direction from the first end 1e. The support body 15 supports the one end portion including the first end 1e of each of the two or more cells 1. The fixing material 13 is located between the cell stack 11 and the support body 15. The two or more cells 1 include the first cell. The fixing material 13 includes the first portion located closer to the first cell than the support body 15 is and including a protruding portion 13a protruding in the first direction or a direction opposite to the first direction. As a result, the durability of the fixing material 13 is less likely to be reduced, and thus the durability of the electrochemical cell device is less likely to be reduced.

The electrochemical cell device according to the embodiment includes the element portion 3, the support body, and the fixing material 13. The element portion 3 has the first end and extends from the first end in the first direction. The support body supports the one end portion of the element portion 3 in the first direction. The fixing material 13 is located between the element portion 3 and the support body. The fixing material 13 includes the first portion including the protruding portion 13a protruding in the first direction or the direction opposite to the first direction. As a result, the durability of the fixing material 13 is less likely to be reduced, and thus the durability of the electrochemical cell device is less likely to be reduced.

The module 100 according to the embodiment includes the electrochemical cell device described above, and the storage container 101 that houses the electrochemical cell device. As a result, the module 100 having high durability can be obtained.

The module housing device 110 according to the embodiment includes the module 100 described above, the auxiliary device configured to operate the module 100, and the external case housing the module 100 and the auxiliary device. Thus, the module housing device 110 having the durability less likely to be reduced can be obtained.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
3 Element portion
5 Fuel electrode
6 Solid electrolyte layer
7 Intermediate layer
8 Air electrode
10 Cell stack device
11 Cell stack
12 Fixing member
13 Fixing material
14 Support member
15 Support body
16 Gas tank
17 End current collection member
18 Electrically conductive member
100 Module
110 Module housing device

## Claims

1. An electrochemical cell device comprising:
a cell stack comprising two or more cells, each of the two or more cells comprising a first end and extending from the first end in a first direction;
a support body supporting one end portion comprising the first end of each of the two or more cells; and
a fixing material located between the cell stack and the support body, wherein the two or more cells comprise a first cell,
the fixing material comprises a first portion comprising a protruding portion protruding in the first direction or a direction opposite to the first direction, and
the first portion is closer to the first cell than the support body.

2. The electrochemical cell device according to claim 1, wherein
the two or more cells further comprise a second cell adjacent to the first cell, and
the first portion is located between the first cell and the second cell or between the first cell and the support body.

3. The electrochemical cell device according to claim 1 or 2, wherein the first portion comprises a space that is between the fixing material and the first cell and is extending in the first direction.

4. The electrochemical cell device according to claim 3, wherein at least one end of the space in the first direction is closed by the protruding portion.

5. The electrochemical cell device according to any one of claims 1 to 4, wherein
the first cell comprises:
a contact region in contact with the fixing material; and
a non-contact region in no contact with the fixing material,
the contact region has a second end located on a side of the first end, and
a length in the first direction from the second end to the non-contact region on a side opposite to the first end is larger at a first site located in the first portion than at a second site not located in the first portion.

6. An electrochemical cell device comprising:
an element portion having a first end and extending from the first end in a first direction;
a support body supporting one end portion of the element portion in the first direction; and
a fixing material:
located between the element portion and the support body: and
comprising
a first portion that comprises a protruding portion protruding in the first direction or a direction opposite to the first direction.

7. A module comprising:
the electrochemical cell device according to any one of claims 1 to 6; and
a container housing the electrochemical cell device.

8. A module housing device comprising:
the module according to claim 7;
an auxiliary device configured to operate the module; and
an external case housing the module and the auxiliary device.
